# EUROPEAN PATENT SPECIFICATION

(11) **EP 2 883 588 B1**
(45) Date of publication and mention of the grant of the patent: **25.05.2016**
(21) Application number: 12885046.8
(22) Date of filing: 10.12.2012
(51) Int. Cl.: C02F 11/12, B01D 33/27, B01D 33/00, C02F 103/00, C02F 103/20, C02F 103/32

(54) **SOLID-LIQUID SEPARATION DEVICE**
FESTSTOFF- UND FLÜSSIGKEITSTRENNVORRICHTUNG
DISPOSITIF DE SÉPARATION SOLIDE-LIQUIDE

(30) Priority: 19.09.2012 JP 2012205180
(43) Date of publication of application: 17.06.2015
(73) Proprietor: Tsurumi Manufacturing Co., Ltd., Osaka 538-8585 (JP)
(72) Inventor: SENGA Tatsuya, Osaka-shi Osaka 538-8585 (JP); KOYANAGI Masahiro, Osaka-shi Osaka 538-8585 (JP); HIGASA Tetsuo, Osaka-shi Osaka 538-8585 (JP)
(74) Representative: Brevalex
(86) International application number: PCT/JP2012/081937
(87) International publication number: WO 2014/045467

(56) References cited:
- JP-A- H09 206 517
- JP-A- 2001 314 899
- JP-A- 2007 289 839

## Description

### Technical Field

The present invention relates to a solid-liquid separator for separately taking out a solid component and a liquid component separated from the solids of sludge, in particular, the suspended solids (SS) contained in the liquid produced in, for example, a sewage plant, a night soil treatment plant, or a treatment plant for treating wastewater containing sludge in industries such as livestock and agricultural industries, food manufacturing industry, and chemical industry.

### Background Art

Currently, it is well known that wastewater containing sludge, that is, sewage suspension produced in, for example, a sewage plant, a night soil treatment plant, or a wastewater treatment plant in industries such as livestock and agricultural industries, food manufacturing industry, and chemical industry, cannot be drained as it is from the viewpoint of environmental destruction. Thus, treating the sewage suspension with the suspended solids (SS) contained therein being removed as much as possible has been a challenge.

JPH 02-31807 A discloses a filtration apparatus having a plurality of layered rotary filter units arranged at regular intervals in a discharge direction, each of the layered rotary filter units having a plurality of sets of filter pieces secured to a rotary shaft inserted therethrough, each of the sets having a large-diameter filter piece, a small-diameter filter piece and a spacer filter piece that are different in diameter and each having a thickness of about 1 mm to 2 mm. The rotary filter units are rotated in the same direction. Outer circumferential edges of the large-diameter disk filter pieces of one of the mutually adjacent layered rotary filter units is disposed close to outer circumferential edges of the small-diameter disk filter pieces of the other of the layered rotary filter units. In this filtration apparatus, each of the large-diameter disk filter pieces of the layered rotary filter unit is combined with adjacent ones, in front and rear, of the small-diameter disk filter pieces such that it faces the small-diameter disk filter pieces, so that when the layered rotary filter units are rotated, the large-diameter disk filter pieces rotate through narrow gaps between the small-diameter disk filter pieces, thereby filtering suspension liquid while preventing a clogging between filtering surfaces.

JP 2979296 B2 discloses a filtration apparatus for filtering suspension liquid, wherein large-diameter filter pieces and small-diameter filter pieces of the layered rotary filter units are different in diameter and have a thickness of about 0.2 mm to 1 mm.

Further, JP S53-141979 A discloses a filtration apparatus for filtering suspension liquid, wherein large-diameter filter pieces and small-diameter filter pieces of the layered rotary filter units are different in diameter and have a smaller thickness of 0.05 mm to 0.8 mm. In a region where the outer circumferential edges of the large-diameter disk filter pieces of one of the mutually adjacent layered rotary filter units is disposed close to the outer circumferential edges of the small-diameter disk filter pieces of the other of the layered rotary filter units, that is, in a meshing region, each gap between the large-diameter disk filter pieces of the other forms a narrow clearance groove of 0.2 mm.

### Summary of Invention

### Problems that the Invention aims at solving

In the suspension filtration apparatus disclosed in JPH 02-31807 A, the narrow gaps between the small-diameter disk filter pieces need to be at least slightly wider than the thickness of the large-diameter disk filter pieces that are rotated in a state in which they mesh with the small-diameter disk filter pieces. However, because the large-diameter disk filter pieces are completely fixed to the rotary shaft, they rotate along the same track. Therefore, there has been a drawback in that the cake, a product of dewatering filtration that is supposed to be scraped out, sticks and consolidates in the narrow gaps between the small diameter disk filter pieces in a region not covered by the thickness of the large-diameter disk filter pieces, thereby causing the clogging of the filtering surfaces and disabling the solid-liquid separation of the suspension.

Further, according to the suspension filtration apparatus disclosed in JP 2979296 B2, because the large-diameter and small-diameter disk filter pieces have very small thickness of about 0.2 mm to 1 mm, processing strain and heat strain are produced at the time of pressing and lasing, and such strain needs be removed. Further, when the diameter of the disk filter piece is increased, the influence of the strain becomes significant. That is, there has been a drawback in that both surfaces of the large-diameter disk filter pieces forming the narrow gap between the mutually adjacent small-diameter disk filter pieces contact and interfere, whereby, in addition to an increase in torque of the rotary shaft of the layered rotary filter unit, wear of the large-diameter and small-diameter disk filter pieces is facilitated.

Furthermore, according to the suspension filtration apparatus disclosed in JPS 53-141979 A, the large-diameter and small-diameter disk filter pieces of the layered rotary filter unit have a smaller thickness of 0.05 mm to 0.8 mm, and in a region where the outer circumferential edges of the large-diameter disk filter pieces of one of the mutually adjacent layered rotary filter units is disposed close to the outer circumferential edges of the small-diameter disk filter pieces of the other of the layered rotary filter units, that is, in a meshing region, each gap between the large-diameter disk filter pieces of the other forms a narrow clearance groove of 0.2 mm. Thus, the thickness of the large-diameter disk filter pieces inserted into the narrow clearance grooves is inevitably smaller than the narrow clearance grooves and is about 0.1 mm. Consequently, the clearance at the front and rear surfaces of each of the large-diameter disk filter pieces is {0.2 mm (narrow clearance groove) - 0.1 mm (thickness of large-diameter disk filter piece)}/2 = 0.05 mm, which requires precise assembling. Therefore, assembling is carried out while adjusting and confirming the clearance at the front and rear surfaces of each of the large-diameter disk filter pieces inserted into the respective narrow clearance grooves by inserting an adjusting member, such as an adjusting film having a thickness of about 0.05 mm, as means for adjusting the strain of the large-diameter and small-diameter disk filter pieces or an error in the thickness thereof. Thus, there has been a drawback that assembling requires time and skill.

In view of the problems described above, it is an object of the present invention to provide a solid-liquid separator which can stably maintain a filtration function, without clogging at filtering surfaces of a layered rotary filter unit, and without contact and interference at respective surfaces of large-diameter disk filter pieces so that rotary shaft torque of the layered rotary filter unit is not increased, and further without requiring time and skill in assembling.

### Means for Solving the Problems

The solid-liquid separator according to the present invention is defined by the appended claims.

It comprises:
a treatment tank having an untreated liquid inlet, a solid outlet, and a filtrate outlet;
a plurality of triple layered rotary filter units provided between the untreated liquid inlet and the solid outlet, each of the triple layered rotary filter units including a large-diameter disk filter piece, a small-diameter disk filter piece having a smaller diameter than the large-diameter disk filter piece, a plurality of projection-equipped disk filter pieces each having a smaller diameter than the large-diameter disk filter piece but larger than the small-diameter disk filter piece, and a rotary shaft; and
seal members provided on a feed side lateral wall and a discharge side lateral wall of the treatment tank to collect fine particles contained in the liquid being treated,
wherein an end face of the projection of each of the projection-equipped disk filter pieces abuts a back surface of an adjacent one of the projection-equipped disk filter pieces in series to form a plurality of filter grooves,
the large-diameter disk filter piece is disposed in a first filter groove of the plurality of filter grooves and is stacked on an outer periphery of the rotary shaft inserted therethrough, such that the large-diameter disk filter piece is movable in an axial direction,
the small-diameter disk filter piece is disposed in a second filter groove next to the first filter groove and is stacked on the outer periphery of the rotary shaft inserted therethrough, such that the small-diameter disk filter piece is movable in the axial direction,
the triple layered rotary filter units are arranged at regular intervals in an ascending manner in a discharge direction towards the solid outlet and in two upper and lower rows opposed to each other,
with regard to adjacent ones of the triple layered rotary filter units, an outer circumferential edge of the large-diameter disk filter piece of one of the triple layered rotary filter units is inserted into the second filter groove of the other of the triple layered rotary filter units so as to be close to the projection of the projection-equipped disk filter piece and an outer circumferential edge of the small-diameter disk filter piece of the other triple layered rotary filter unit,
outer edges of the seal members are disposed to face closely, with a clearance, to the outer circumferential edge of the projection-equipped disk filter piece of the triple layered rotary filter unit at an end of each of the two upper and lower rows on the solid outlet side and to the outer circumferential edge of the projection-equipped disk filter piece of the triple layered rotary filter unit at the beginning of the lower row on the untreated liquid inlet side, among the triple layered rotary filter units arranged in the two upper and lower rows opposed to each other, and
the large-diameter disk filter piece and the small-diameter disk filter piece are configured to rotate synchronously with the rotary shaft while oscillating in the axial direction in the first filter groove and the second filter groove respectively.

It is preferable that the solid-liquid separator according to the present invention further comprise a double layered rotary filter unit including a pair of projection-equipped disk filter pieces, a small-diameter disk filter piece, and a rotary shaft,
wherein an end face of the projection of one of the pair of projection-equipped disk filter pieces of the double layered rotary filter units abuts a back surface of the other projection-equipped disk filter piece in series to form a plurality of third filter grooves,
the small-diameter disk filter piece of the double layered rotary filter unit is disposed in the third filter grooves and is stacked on an outer periphery of the rotary shaft of the double layered rotary filter unit inserted therethrough, so as to be movable in the axial direction,
the double layered rotary filter unit is arranged at the end of each of the two upper and lower rows of the triple layered rotary filter units opposed to each other and/or at the beginning of the lower row on the untreated liquid inlet side, and
the outer edges of the seal members are disposed to face closely, with a clearance, to an outer circumferential edge of the double layered rotary filter unit.

It is also preferable that the solid-liquid separator according to the present invention be configured such that:
filtrate holes are provided concentrically in the projection-equipped disk filter pieces and the large-diameter disk filter pieces of the plurality of triple layered rotary filter units and in the projection-equipped disk filter pieces of the double layered rotary filter unit arranged at the beginning of the lower row on the untreated liquid inlet side, and filtrate cutout holes are provided concentrically in the small-diameter disk filter pieces of the plurality of triple layered rotary filter units and in the disk filter pieces of the double layered rotary filter unit,
the filtrate holes and the filtrate cutout holes form filtrate passages inside the triple layered rotary filter units and the double layered rotary filter unit after being stacked,
openings at filtrate sending terminals of the respective filtrate passages lead into an inside of a filtrate chamber provided outside the lateral wall of the treatment tank, and
a lower wall of the filtrate chamber is provided with a filtrate chamber outlet.

Further, in the solid-liquid separator according to the present invention, the projection-equipped disk filter pieces are preferably made of resin.

### Advantages of the Invention

According to the solid-liquid separator of the invention, unlike JPH 02-31807 A, JP 2979296 B2 and JPS 53-141979 A, the large-diameter and small-diameter disk filter pieces are not stacked in a fixed manner in the triple layered rotary filter units, so that they can rotate while oscillating in the axial direction in the filter grooves. This provides oscillation actions of the small-diameter disk filter piece and the large-diameter disk filter piece in the area in the respective filter grooves wider than the thickness of the large-diameter and small-diameter disk filter pieces, that is, between the end faces of the projection-equipped disk filter pieces, an oscillation action of the large-diameter disk filter piece of the other triple layered rotary filter unit inserted into the filter groove, and in addition, a shearing action produced by the respective rotations of the outer circumferential edge of the large-diameter disk filter piece of one of the triple layered rotary filter units and the outer circumferential edge of the small-diameter disk filter piece of the other of the triple layered rotary filter units facing this large-diameter disk filter piece, thereby preventing the cake, a product of dewatering filtration that is supposed to be scraped out, from sticking and consolidating in the narrow gaps of the filter grooves. This self-cleaning effect is advantageous in that it can always prevent the filtering surfaces from being clogged.

Further, in JPH 02-31807 A, JP 2979296 B2 and JPS 53-141979 A, the filter grooves are formed by stacking the large-diameter and small-diameter disk filter pieces in a fixed manner. Therefore, the accuracy of the width and position of the filter grooves is greatly affected by the accuracy of the thickness and flatness of the filter pieces, the fastening strengths at the time of stacking and assembling, and the like. Thus, meticulous care and adjustment are required at the time of assembling, and the assembling requires great effort and skill. In contrast, in the triple layered rotary filter unit according to the invention, the large-diameter and small-diameter disk filter pieces are disposed in the respective filter grooves, which are formed by the abutment of the end faces of the projections of the projection-equipped disk filter pieces, such that they are movable in the axial direction. That is, they are mounted in a loosely fitted manner. With this structure, accuracy of the filter grooves required with respect to the strain and variations (errors) in the thickness of the respective filter pieces is ensured very easily, without paying meticulous care and adjustment at the time of assembling. This eliminates the need for the excessive precision of the thickness and flatness of the filter pieces, and also eliminates the need for the deftness in assembling. Especially, when assembling a layered rotary filter unit having a large width to enhance the treatment performance, there is a great advantage that even an unskilled person can assemble it quickly and accurately.

### Brief Description of the Drawings

Fig. 1 is a longitudinal sectional view of Embodiment 1 of the present invention;
Fig. 2 is a sectional view taken along the line X-X from the direction of the arrow in Fig. 1;
Fig. 3 illustrates a triple layered rotary filter unit according to Embodiment 1 or 2 of the present invention, wherein (a) is a front view, and (b) is a longitudinal sectional view thereof;
Fig. 4 is an enlarged side view of a relevant portion of the triple layered rotary filter units according to Embodiment 1 or 2 of the present invention, illustrating how they are disposed adjacent to each other;
Fig. 5 illustrates a large-diameter disk filter piece forming the triple layered rotary filter unit according to Embodiment 1 or 2 of the present invention, wherein (a) is a front view, and (b) is a longitudinal sectional view thereof;
Fig. 6 illustrates a small-diameter disk filter piece forming the triple or double layered rotary filter unit according to Embodiment 1 or 2 of the present invention, wherein (a) is a front view, and (b) is a longitudinal sectional view thereof;
Fig. 7 illustrates a projection-equipped disk filter piece forming the triple or double layered rotary filter unit according to Embodiment 1 or 2 of the present invention, wherein (a) is a front view, and (b) is a longitudinal sectional view thereof;
Fig. 8 is a longitudinal sectional view of Embodiment 3 based on Embodiment 1 of the present invention;
Fig. 9 is a sectional view taken along the line Y-Y from the direction of the arrow in Fig. 8.
Fig. 10 illustrates a triple layered rotary filter unit according to Embodiment 3 of the present invention, wherein (a) is a front view, and (b) is an A-A sectional view thereof;
Fig. 11 is an enlarged side view of a relevant portion of the plurality of triple layered rotary filter units according to Embodiment 3 of the present invention, illustrating how they are disposed adjacent to each other;
Fig. 12 illustrates a large-diameter disk filter piece forming the triple layered rotary filter unit according to Embodiment 3 of the present invention, wherein (a) is a front view, and (b) is a longitudinal sectional view thereof;
Fig. 13 illustrates a small-diameter disk filter piece forming the triple layered rotary filter unit according to Embodiment 3 of the present invention, wherein (a) is a front view, and (b) is a longitudinal sectional view thereof;
Fig. 14 illustrates a projection-equipped disk filter piece forming the triple layered rotary filter unit according to Embodiment 3 of the present invention, wherein (a) is a front view, and (b) is a longitudinal sectional view thereof;
Fig. 15 is a longitudinal sectional view of an example of Embodiment 2 based on Embodiment 1 of the present invention, in which the ends of the two upper and lower rows on the solid outlet side are configured as double layered rotary filter units;
Fig. 16 is a longitudinal sectional view of another example of Embodiment 2 based on Embodiment 1 of the present invention, in which the beginning of the lower row on the untreated liquid inlet side is configured as a double layered rotary filter unit; and
Fig. 17 is a longitudinal sectional view of still another example of Embodiment 2 based on Embodiment 1 of the present invention, in which the ends of the two upper and lower rows on the solid outlet side and the beginning of the lower row on the untreated liquid inlet side are configured as double layered rotary filter units.

### Best Mode for Carrying Out the Invention

Hereinafter, a solid-liquid separator according to embodiments of the present invention will be described in detail with reference to the drawings and based on the following Embodiments 1 to 4. However, the present invention is not limited by these embodiments. A solid-liquid separator according to embodiments of the present invention includes a treatment tank having an untreated liquid inlet, a solid outlet, and a filtrate outlet, a plurality of triple layered rotary filter units provided between the untreated liquid inlet and the solid outlet, each of the triple layered rotary filter units including a large-diameter disk filter piece, a small-diameter disk filter piece having a smaller diameter than the large-diameter disk filter piece, a plurality of projection-equipped disk filter pieces each having a smaller diameter than the large-diameter disk filter piece but larger than the small-diameter disk filter piece, and a rotary shaft, and seal members provided on a feed side lateral wall and a discharge side lateral wall of the treatment tank to collect fine particles contained in the liquid being treated. An end face of the projection of each of the projection-equipped disk filter pieces abuts a back surface of an adjacent one of the projection-equipped disk filter pieces in series to form a plurality of filter grooves. The large-diameter disk filter piece is disposed in a first filter groove of the plurality of filter grooves and is stacked on an outer periphery of the rotary shaft inserted therethrough, such that the large-diameter disk filter piece is movable in an axial direction. The small-diameter disk filter piece is disposed in a second filter groove next to the first filter groove and is stacked on the outer periphery of the rotary shaft inserted therethrough, such that the small-diameter disk filter piece is movable in the axial direction. The triple layered rotary filter units are arranged at regular intervals in an ascending manner in a discharge direction towards the solid outlet and in two upper and lower rows opposed to each other. With regard to adjacent ones of the triple layered rotary filter units, an outer circumferential edge of the large-diameter disk filter piece of one of the triple layered rotary filter units is inserted into the second filter groove of the other of the triple layered rotary filter units so as to be close to the projection of the projection-equipped disk filter piece and an outer circumferential edge of the small-diameter disk filter piece of the other triple layered rotary filter unit. Outer edges of the seal members are disposed to face closely, with a clearance, to the outer circumferential edge of the projection-equipped disk filter piece of the triple layered rotary filter unit at an end of each of the two upper and lower rows on the solid outlet side and to the outer circumferential edge of the projection-equipped disk filter piece of the triple layered rotary filter unit at the beginning of the lower row on the untreated liquid inlet side, among the triple layered rotary filter units arranged in the two upper and lower rows opposed to each other. The large-diameter disk filter piece and the small-diameter disk filter piece are configured to rotate synchronously with the rotary shaft while oscillating in the axial direction in the first filter groove and the second filter groove respectively.

### Embodiment 1

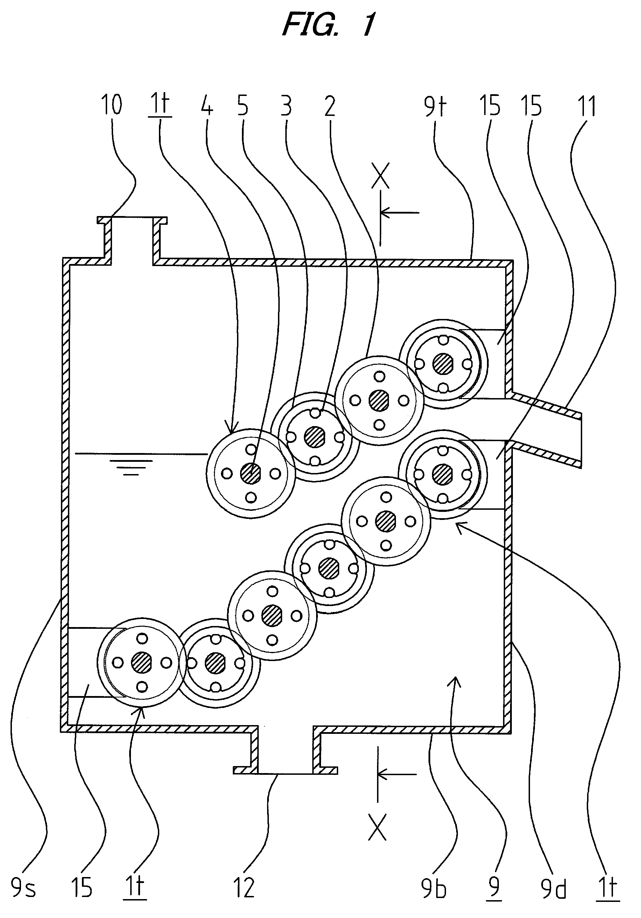

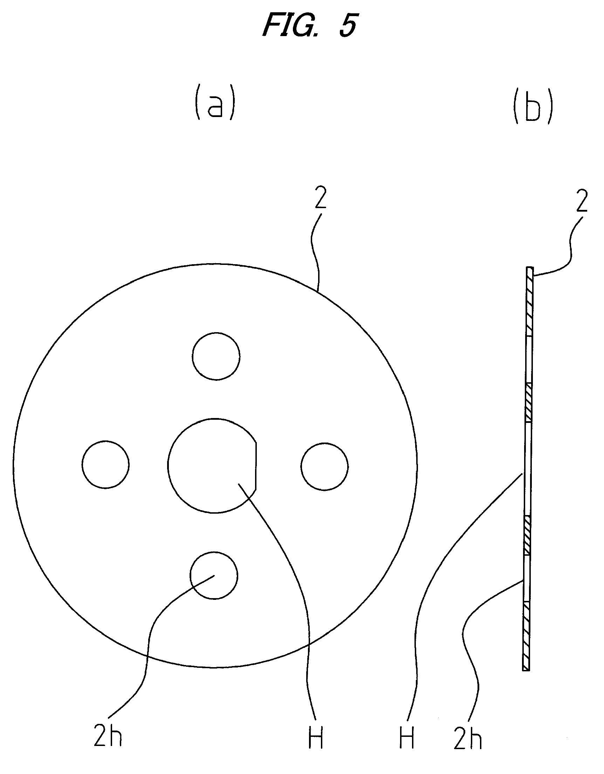

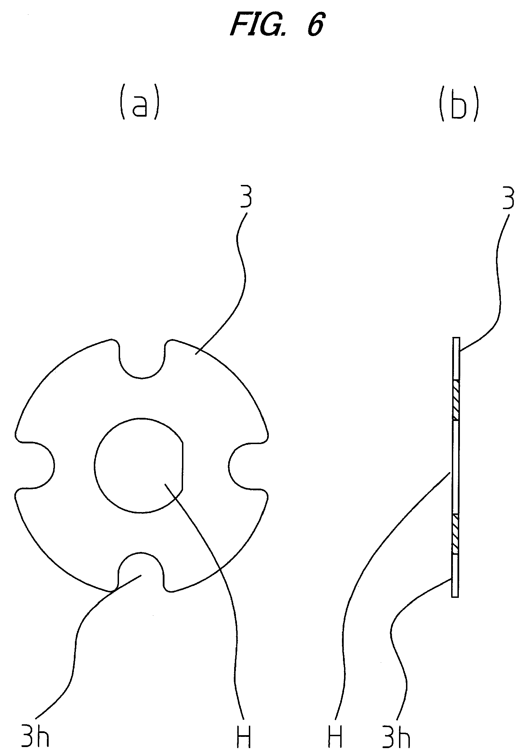

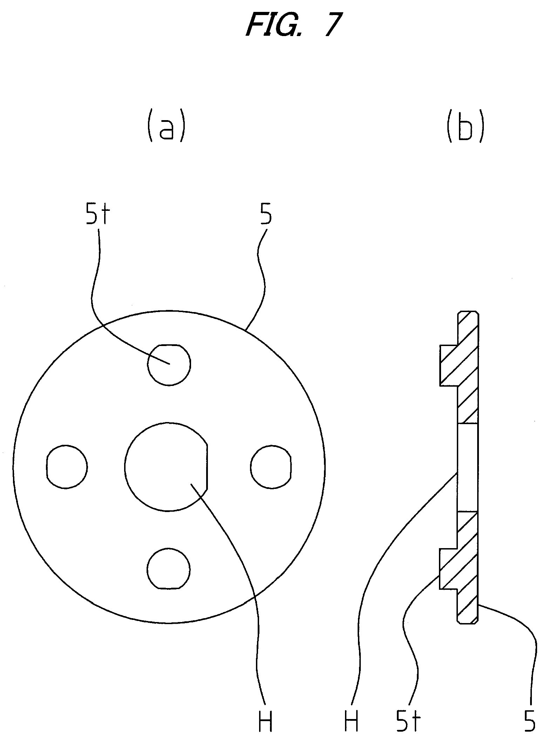

With reference to Figs. 1 to 7, an upper portion of a treatment tank 9 is provided with an untreated liquid inlet 10 from which untreated liquid is fed, and a lower portion of the treatment tank 9 is provided with a filtrate outlet 12 from which the filtrate after the solid-liquid separation is discharged outside the treatment tank 9. A lateral side portion of the treatment tank 9 is provided with a solid outlet 11 from which a cake, a solid product of dewatering filtration after the solid-liquid separation, is discharged outside the treatment tank 9. Inside the treatment tank 9, and between the untreated liquid inlet 10 and the solid outlet 11, as shown in Fig. 1, triple layered rotary filter units It are arranged at regular intervals in ascending manner in a discharge direction towards the solid outlet 11 and in two upper and lower rows opposed to each other.

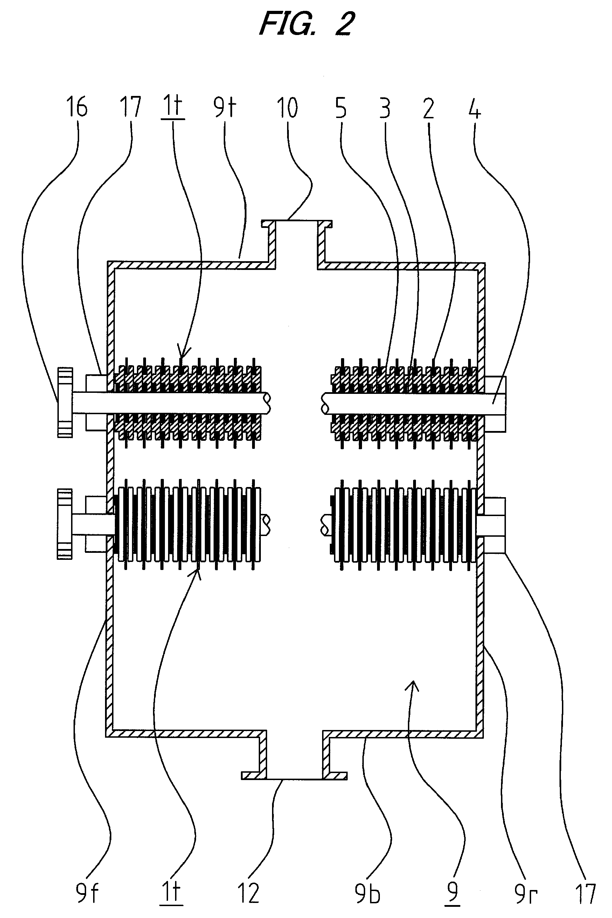

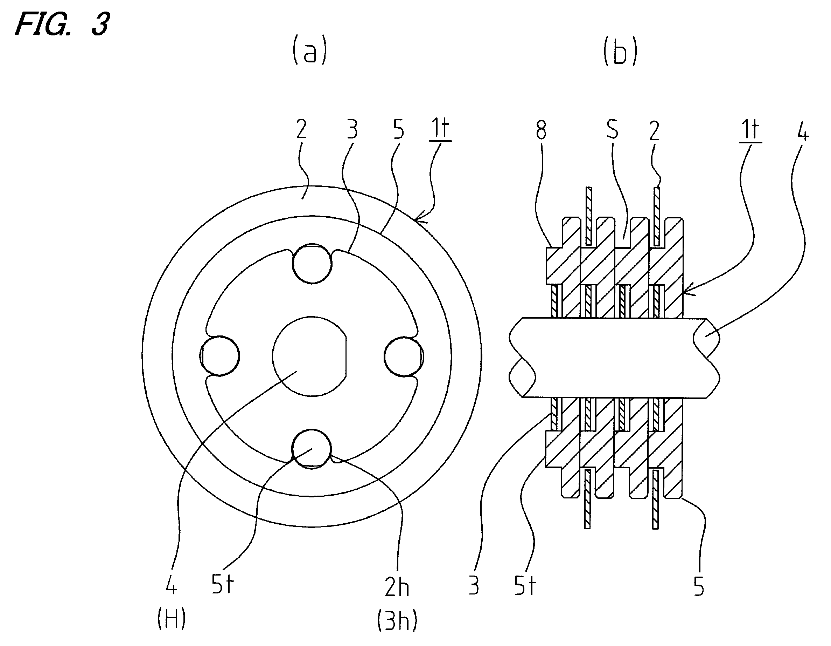

As shown in Figs. 3 and 5 to 7, each of the triple layered rotary filter units It includes a large-diameter disk filter piece 2, a small-diameter disk filter piece 3 having a smaller diameter than the large-diameter disk filter piece 2, a rotary shaft 4, and a plurality of projection-equipped disk filter pieces 5 each having a smaller diameter than the large-diameter disk filter piece 2 but larger than the small-diameter disk filter piece 3. The rotary shaft 4 has an engaging function provided by a D cut, which is obtained by cutting a portion of a cylinder to be a flat surface, or by a key (not shown). As shown in Fig. 2, the rotary shaft 4 is pivotally supported by bearings 17 disposed on outer sides of the front side lateral wall 9f and the rear lateral wall 9r of the treatment tank 9, and is rotated by a drive transmission member 16 (e.g., a worm gear) provided on the outer side the front lateral wall 9f. At the center of each of the filter pieces 2, 3, 5, having different diameters respectively, a shaft hole that fits the engaging configuration of the rotary shaft 4 is provided so as to rotate synchronously with the rotary shaft 4. The plurality of projection-equipped disk filter pieces 5 is provided with projections 5t, and forms filter grooves S (first and second filter grooves) by arranging the end faces of the projections 5t to abut the back surface of the adjacent one of the projection-equipped disk filter pieces 5 in series. In the respective filter grooves S, the large-diameter disk filter piece 2 and the small-diameter disk filter piece 3 are disposed alternately such that they are movable in the axial direction. In this manner, the large-diameter disk filter piece 2 and the small-diameter disk filter piece 3 are configured such that they can rotate synchronously with the rotary shaft 4 while oscillating in the axial direction in the respective filter grooves S.

With regard to the triple layered rotary filter unit It having this configuration, a method of engaging the respective filter pieces 2, 3, 5 with the rotary shaft 4 will be described below. (i) Firstly, among the plurality of projection-equipped disk filter pieces 5, the first projection-equipped disk filter piece 5 is attached to the outer periphery of the rotary shaft 4 by being inserted from the back surface opposite to the side where the projections 5t are provided, (ii) next, the large-diameter disk filter piece 2 is attached to the rotary shaft 4 by being inserted such that the projection loose engaging holes 2h of the large-diameter disk filter piece 2 engage with the projections 5t of the first projection-equipped disk filter piece 5, (iii) next, the second projection-equipped disk filter piece 5, different from the first projection-equipped disk filter piece 5, is attached by being inserted from the back surface opposite to the side where the projections 5t are provided, and the back surface of the second projection-equipped disk filter piece 5 is butted against the end faces of the projections 5t of the first projection-equipped disk filter piece 5 to form the filter groove S, (iv) next, the small-diameter disk filter piece 3 is attached to the rotary shaft 4 by being inserting such that the projections 5t of the second projection-equipped disk filter piece 5 engage with the projection cutout holes of the small-diameter disk filter piece 3, and (v) next, a back surface of a new first projection-equipped disk filter piece 5 is butted against the end faces of the projections 5t of the second projection-equipped disk filter piece 5 to form another filter groove S.

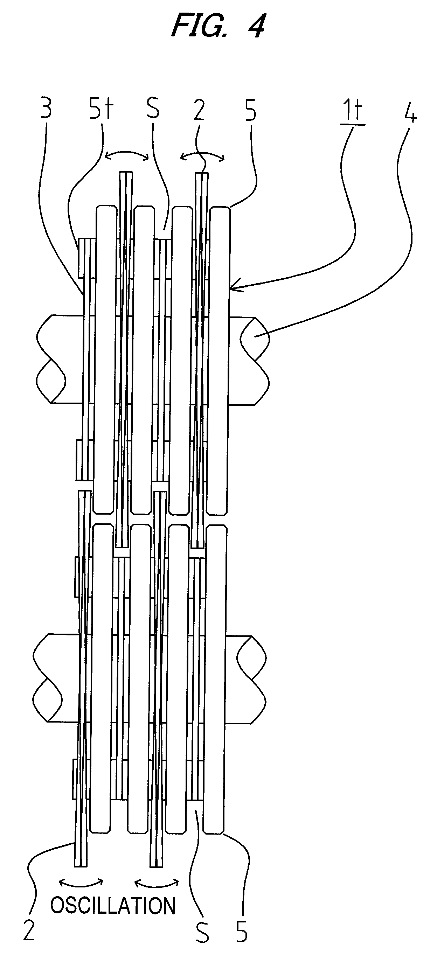

The plurality of triple layered rotary filter units It formed by repeating the steps (i) to (v) described above are configured such that, as shown in Fig. 4, with regard to adjacent ones of the triple layered rotary filter units It, the outer circumferential edge of the large-diameter disk filter piece 2 of one of the triple layered rotary filter units It enters the second filter groove S of the other of the triple layered rotary filter units 1t, and is disposed close to the projection 5t portion of the projection-equipped disk filter piece 5 and the outer circumferential edge of the small-diameter disk filter piece 3 of the other triple layered rotary filter unit 1t.

As shown in Fig. 1, to efficiently collect fine particles contained in the liquid being treated, seal members 15 are provided on the feed side lateral wall 9s and on the discharge side lateral wall 9d of the treatment tank 9. The relevant outer edges of the seal members 15 are disposed to face closely, with a slight clearance, to the outer circumferential edges of the projection-equipped disk filter pieces 5 of the triple layered rotary filter units It provided at an end of each of the two upper and low rows on the solid outlet 11 side and at the beginning of the lower row on the untreated liquid inlet 10 side. Further, it is advantageous to provide brushes having small sliding resistance at the outer circumferential edges of the seal members 15. This can further enhance the sealing function and also can suppress an increase in the torque of the rotary shaft 4.

### Embodiment 2

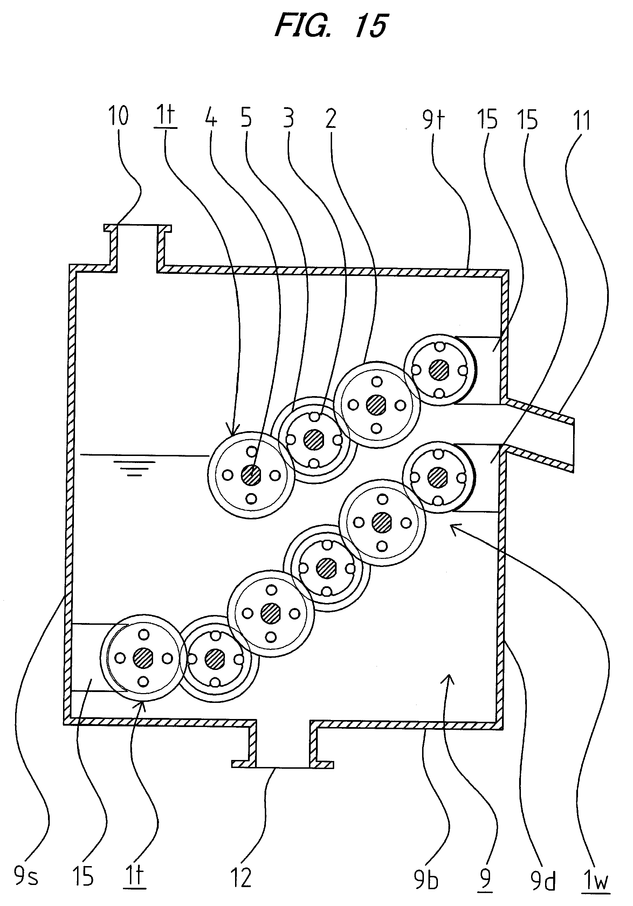

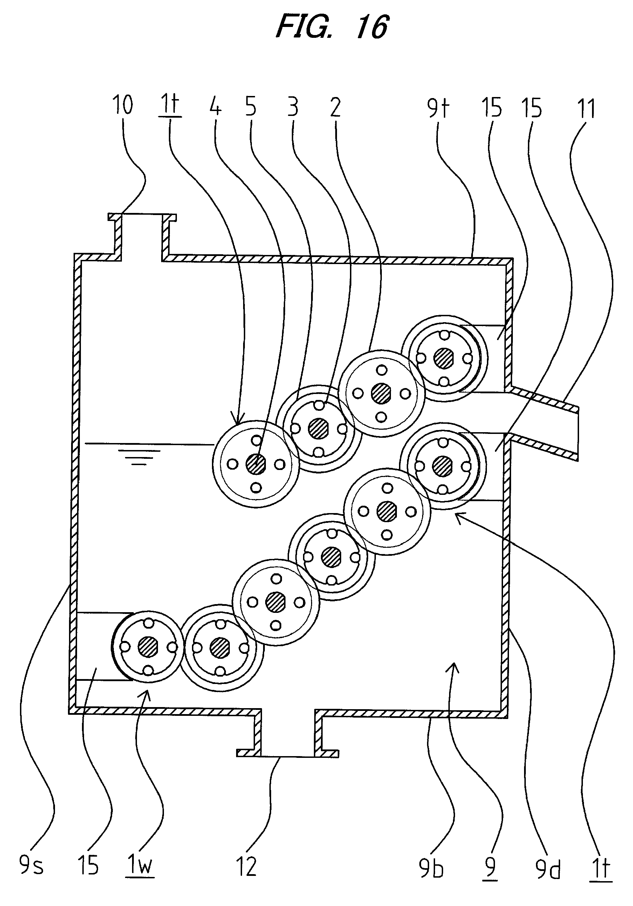

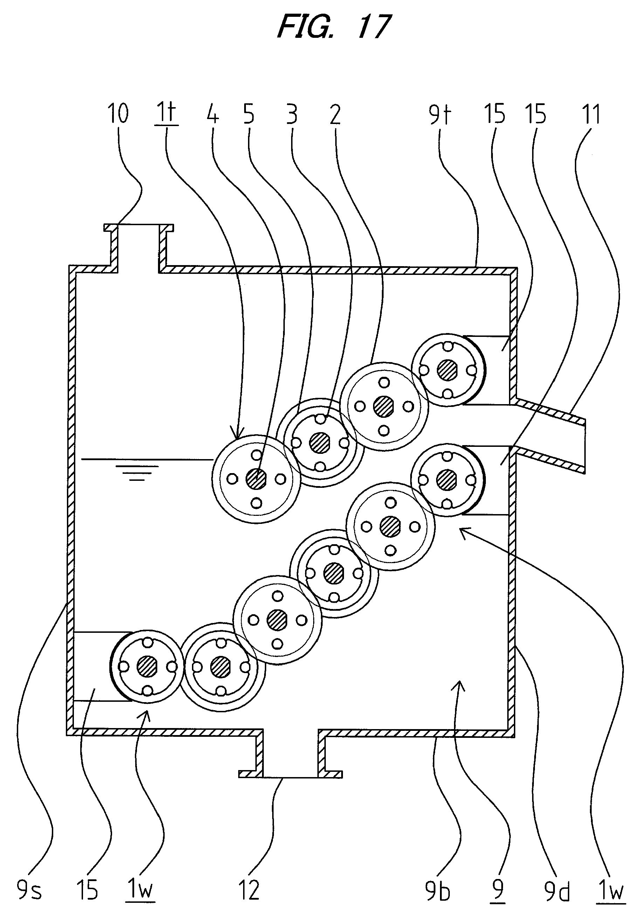

Embodiment 2 will be described using Figs. 15 to 17 as examples. In addition to the triple layered rotary filter units It arranged in two upper and lower rows at regular intervals in ascending manner in the discharge direction towards the solid outlet 11 and in two upper and lower rows opposed to each other, the treatment tank 9 is provided with a double layered rotary filter unit 1w having a pair of projection-equipped disk filter pieces 5, 5, a small-diameter disk filter piece 3, and a rotary shaft 4. The double layered rotary filter unit 1w is provided at the end of each of the upper and lower rows on the solid outlet 11 side and/or at the beginning of the lower row on the untreated liquid inlet 10 side.

A method of assembling the double layered rotary filter unit 1w will be described below. (vi) Firstly, one of the paired projection-equipped disk filter pieces 5, 5 is attached to the outer periphery of the rotary shaft 4 by being inserted from the back surface opposite to the side where the projections 5t are provided, (vii) next, the small-diameter disk filter piece 3 is attached to the rotary shaft 4 by being inserted such that the projections 5t of the projection-equipped disk filter piece 5 engage with the projection cutout holes 3h of the small-diameter disk filter piece 3 and such that the small-diameter disk filter piece 3 is movable in the axial direction, and (viii) next, the back surface of the other projection-equipped disk filter piece 5 is butted against the end face of the projections of the previously described projection-equipped disk filter piece 5 to form a filter groove S (a third filter groove).

The outer edges of the seal members 15 provided on the side walls of the treatment tank 9 are disposed to face closely to, with a slight clearance, the outer circumferential edges of the double layered rotary filter units 1 w formed by repeating the steps (vi) to (viii) described above. It is advantageous to form the leading end of the outer edges of the seal members 15 as a spatula-like edge having small sliding resistance like a scraper.

### Embodiment 3

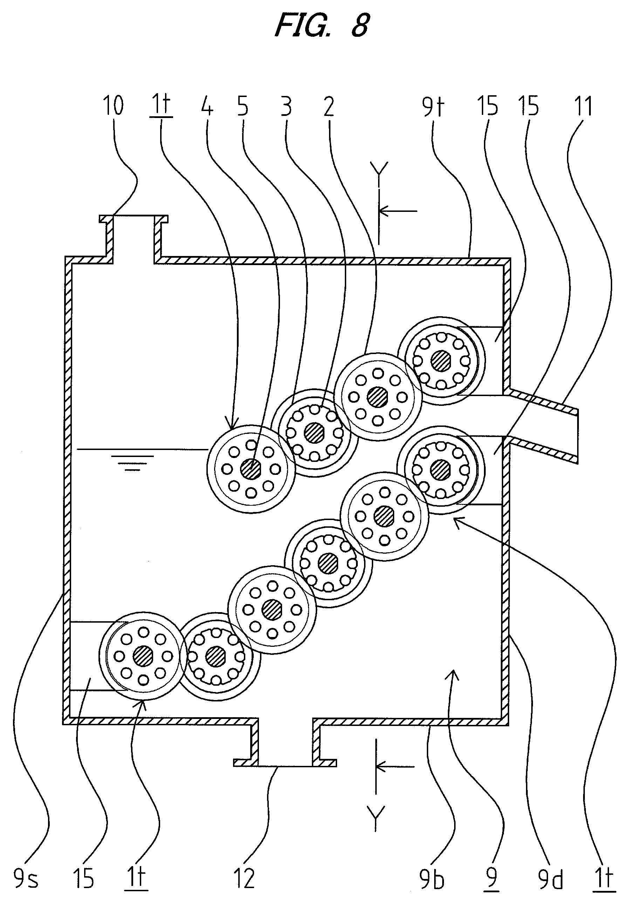

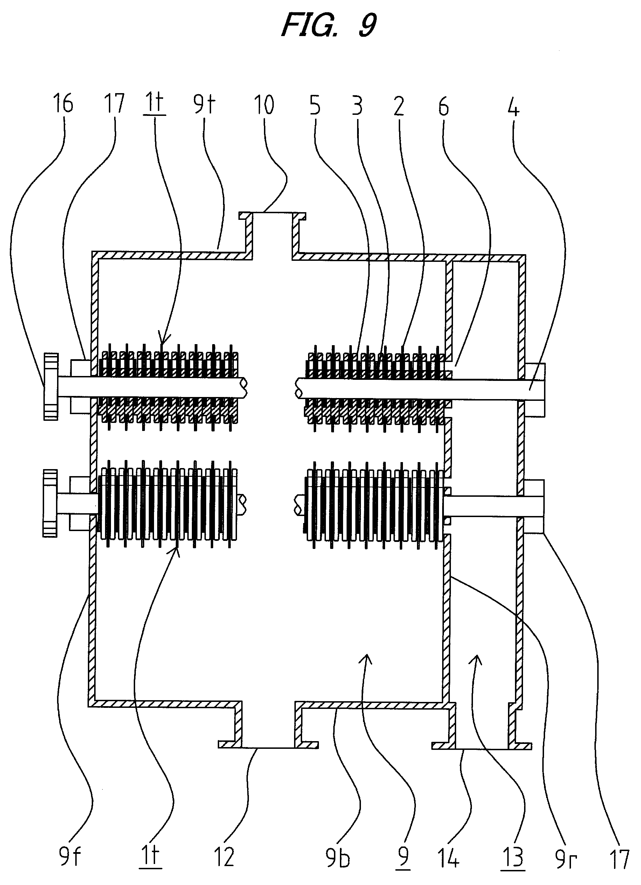

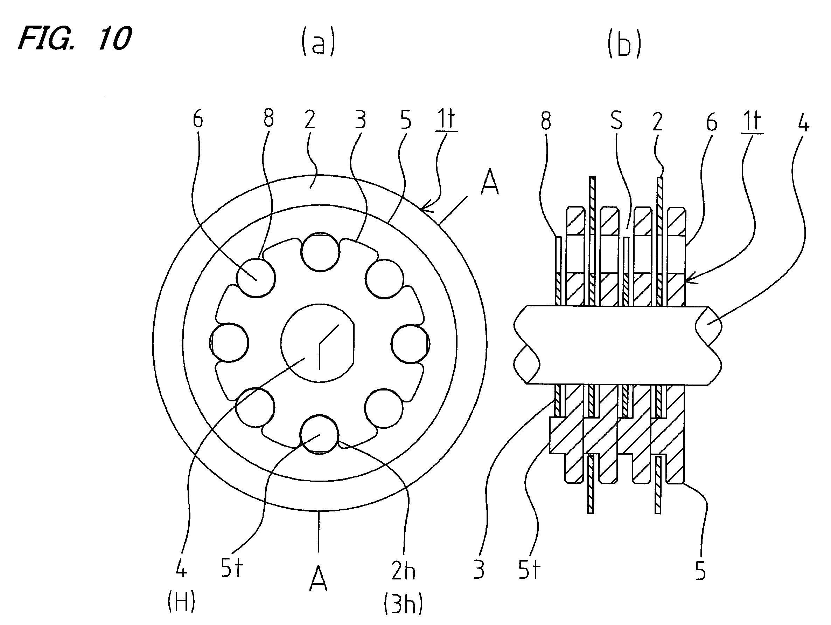

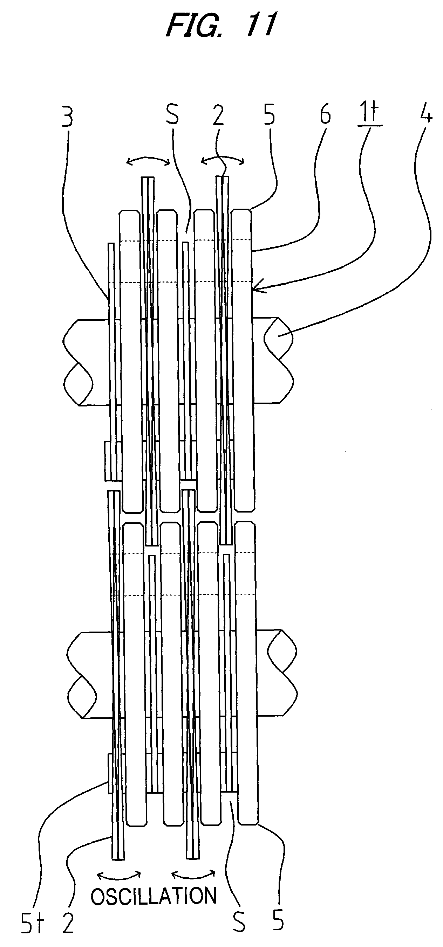

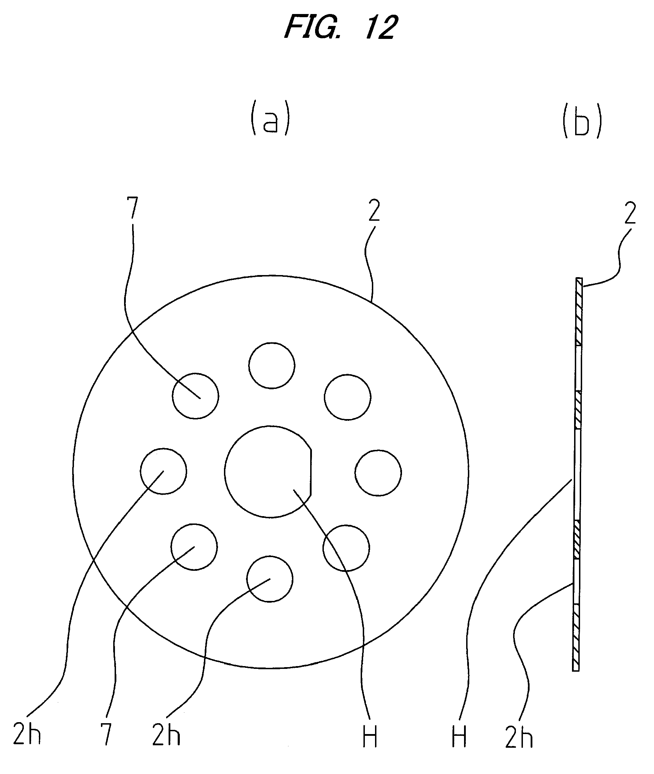

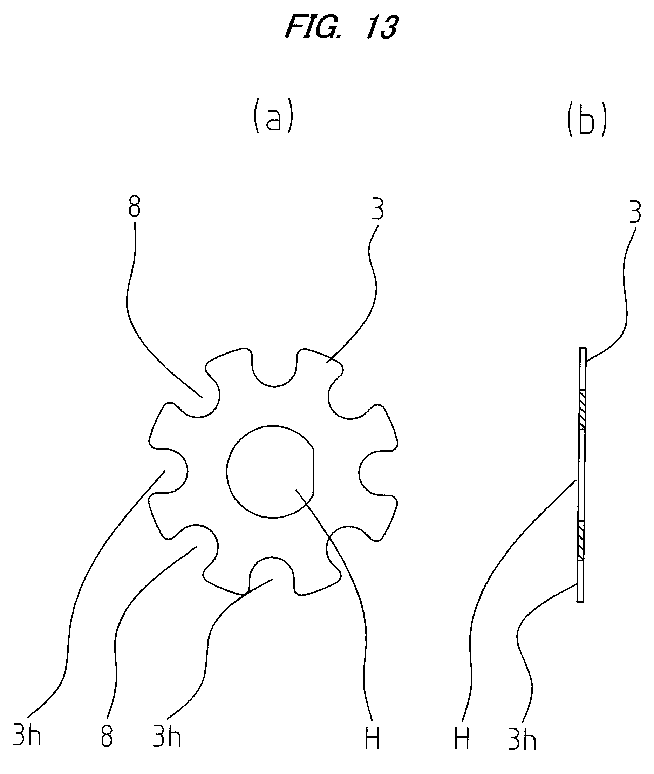

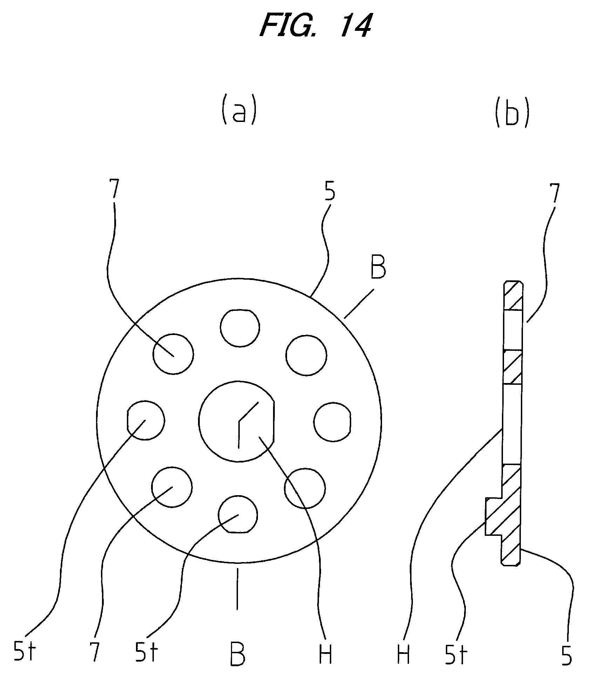

Embodiment 3 will be described using Figs. 8 to 14 as examples. With regard to the triple layered rotary filter units It arranged at regular intervals in an ascending manner in the discharge direction towards the solid outlet 11 and in two upper and lower rows opposed to each other, and with regard to the double layered rotary filter unit 1w arranged at the beginning of the lower row on the untreated liquid inlet 10 side, as shown in Figs. 12 to 14, filtrate holes 7 are concentrically provided in the projection-equipped disk filter piece 5 and in the large-diameter disk filter piece 2, and filtrate cutout holes 8 are concentrically provided in the small-diameter disk filter piece 3. As shown in Figs. 9 to 11, the filtrate holes 7 and the filtrate cutout holes 8 form filtrate passages 6 inside the respective layered rotary filter units It, 1w after being stacked. The opening at the filtrate sending terminal of the passage 6 leads to an inside of a filtrate chamber 13 provided outside the rear lateral wall 9r of the treatment tank 9, and a filtrate chamber outlet 14 is formed at the lower wall of the filtrate chamber 13.

### Embodiment 4

In this embodiment, the projection-equipped disk filter pieces 5 forming the triple layered rotary filter unit It and the double layered rotary filter unit 1w are configured as resin molded pieces, which are free from rust, light in weight, not requiring processing, and suitable for mass production.

According to the solid-liquid separator of the embodiments, the large-diameter disk filter piece 2 and small-diameter disk filter piece 3 are not stacked in a fixed manner in the triple layered rotary filter unit It, so that the large-diameter disk filter piece 2 and small-diameter disk filter piece 3 can rotate while oscillating in the axial direction in the respective filter grooves S. This provides the oscillation actions of the large-diameter disk filter piece 2 and small-diameter disk filter piece 3 in the area in the respective filter grooves S wider than the thickness of the large-diameter disk filter piece 2 and small-diameter disk filter piece 3, that is, between the end faces of the projection-equipped disk filter pieces 5, the oscillation action of the large-diameter disk filter piece 2 of the other triple layered rotary filter unit 1t inserted into the filter groove S, and in addition, a shearing action produced by the respective rotations of the outer circumferential edge of the large-diameter disk filter piece 2 and the outer circumferential edge of small-diameter disk filter piece 3 of the other triple layered rotary filter unit 1t disposed to face this large-diameter disk filter piece 2, thereby preventing the product of dewatering filtration (the cake) that is supposed to be scraped out, from sticking and consolidating in the narrow gaps of the filter grooves S. Due to this so-called self-cleaning effect that prevents the cake from sticking and consolidating, the filtering surfaces can always be prevented from being clogged.

Conventionally, the filter grooves are formed by stacking the large-diameter and small-diameter disk filter pieces in a fixed manner. Therefore, the accuracy of the width and position of the filter grooves is greatly affected by the accuracy of the thickness and flatness of the filter pieces, the fastening strengths at the time of stacking and assembling, and the like. Thus, meticulous care and adjustment are required at the time of assembling, and the assembling requires great effort and skill. In contrast, in the triple layered rotary filter unit It according to the present embodiments, the large-diameter disk filter piece 2 and the small-diameter disk filter piece 3 are disposed in the respective filter grooves S, which is formed by the abutment of the end faces of the projections of the projection-equipped disk filter pieces 5, such that they are movable in the axial direction, that is, they are mounted in a loose fit manner. With this structure, accuracy of the filter grooves S required with respect to the strain and variations (errors) in the thickness of each of the large-diameter disk filter piece 2 and the small-diameter disk filter piece 3 is ensured very easily, without paying meticulous care and adjustment at the time of assembling. This eliminates the need for the excessive precision of the thickness and flatness of the large-diameter disk filter piece 2 and the small-diameter disk filter piece 3, and also eliminates the need for the deftness in assembling. Especially, when assembling a layered rotary filter unit having a large width to enhance the treatment performance, there is an advantage that even an unskilled person can assemble it quickly and accurately

Further, according to the solid-liquid separator of the embodiments, because the seal members 15 provided on the lateral walls of the treatment tank 9 can be configured such that they are disposed to face closely to, with a slight clearance, the outer circumferential edges of the triple layered rotary filter units It or the double layered rotary filter units 1w, it is not necessary to consider the outer edges of the seal members 15 interfering with the large-diameter disk filter pieces 2. This configuration is excellent in the assembling efficiency, and allows the closely opposed outer edges of the seal members 15 to be formed long in the axial direction. Therefore, fine particles contained in the liquid being treated can be collected efficiently without leakage.

Further, according to the solid-liquid separator of the embodiments, with the layered rotary filter units It, 1w formed with the filtrate passages 6, as compared with a layered rotary filter unit having no filtrate passage, additional water discharge from the filtrate chamber outlet 14 of the lower wall of the filtrate chamber 13 through the filtrate passages 6 is provided, so that the filtrate separation performance of the large-diameter and small-diameter disk filter piece 2, 3 oscillating and rotating in the respective filter groove S is improved. Consequently, a cake having a low water content percentage can be collected.

According to the solid-liquid separator of the embodiments, because the projection-equipped disk filter piece 5, which is the heaviest piece in the layered rotary filter units 1t, 1w, is made of resin, the weight of the layered rotary filter units 1t, 1w can be greatly reduced. This can reduce the drive power, can maintain the formation of the clog-free and clean filter grooves S due to being rustless, and also can produce the layered rotary filter units It, 1w as resin molded product. Thus, the projection-equipped disk filter pieces 5 of high dimension accuracy can be mass produced without processing, are inexpensive and are easy to assemble. Especially, because the layered rotary filter units It, 1w can be assembled easily with high accuracy, a stable filtration function can be provided.

While the present invention has been described above in detail and with reference to certain embodiments thereof, it is apparent to those skilled in the art that various changes and modifications can be made therein. Further, the number, the location, the shape and the like of the components described above are not limited to the above embodiments, and may be changed to the number, location, shape and the like that are suitable in implementing the present invention.

## Claims

1. A solid-liquid separator comprising:
a treatment tank (9) having an untreated liquid inlet (10), a solid outlet (11), and a filtrate outlet (12);
a plurality of triple layered rotary filter units (It) provided between the untreated liquid inlet (10) and the solid outlet (11), each of the triple layered rotary filter units (1t) including a large-diameter disk filter piece (2), a small-diameter disk filter piece (3) having a smaller diameter than the large-diameter disk filter piece (2), a plurality of projection-equipped disk filter pieces (5) each having a smaller diameter than the large-diameter disk filter piece (2) but larger than the small-diameter disk filter piece (3), and a rotary shaft (4); and
seal members (15) provided on a feed side lateral wall (9s) and a discharge side lateral wall (9d) of the treatment tank (9) to collect fine particles contained in liquid being treated,
wherein each projection-equipped disk filter piece (5) has a plurality of projections (5t),
wherein an end face of the projections (5t) of each of the projection-equipped disk filter pieces (5) abuts a back surface of an adjacent one of the projection-equipped disk filter pieces (5) in series to form a plurality of filter grooves (S),
the large-diameter disk filter piece (2) is disposed in a first filter groove of the plurality of filter grooves (S) and is stacked on an outer periphery of the rotary shaft (4) inserted therethrough, such that the large-diameter disk filter piece (2) is movable in an axial direction,
the small-diameter disk filter piece (3) is disposed in a second filter groove next to the first filter groove and is stacked on the outer periphery of the rotary shaft (4) inserted therethrough, such that the small-diameter disk filter piece (3) is movable in the axial direction,
the triple layered rotary filter units (1t) are arranged at regular intervals in an ascending manner in a discharge direction towards the solid outlet (11) and in two upper and lower rows opposed to each other,
with regard to adjacent ones of the triple layered rotary filter units (1t), an outer circumferential edge of the large-diameter disk filter piece (2) of one of the triple layered rotary filter units (1t) is inserted into the second filter groove of the other of the triple layered rotary filter units (1t) so as to be close to the projections (5t) of the projection-equipped disk filter piece (5) and an outer circumferential edge of the small-diameter disk filter piece (3) of the other triple layered rotary filter unit (1t),
outer edges of the seal members (15) are disposed to face closely, with a clearance, to the outer circumferential edge of the projection-equipped disk filter piece (5) of the triple layered rotary filter unit (1t) at an end of each of the two upper and lower rows on the solid outlet side and to the outer circumferential edge of the projection-equipped disk filter piece (5) of the triple layered rotary filter unit (1t) at the beginning of the lower row on the untreated liquid inlet side, among the triple layered rotary filter units (1t) arranged in the two upper and lower rows opposed to each other, and
the large-diameter disk filter piece (2) and the small-diameter disk filter piece (3) are configured to rotate synchronously with the rotary shaft (4) while oscillating in the axial direction in the first filter groove and the second filter groove respectively.

2. The solid-liquid separator according to claim 1, further comprising a double layered rotary filter unit (1w) including a pair of projection-equipped disk filter pieces (5), a small-diameter disk filter piece (3), and a rotary shaft (4), wherein
an end face of the projections (5t) of one of the pair of projection-equipped disk filter pieces (5) of the double layered rotary filter units (1w) abuts a back surface of the other projection-equipped disk filter piece (5) in series to form a plurality of third filter grooves (S),
the small-diameter disk filter piece (3) of the double layered rotary filter unit (1w) is disposed in the third filter grooves (S) and is stacked on an outer periphery of the rotary shaft (4) of the double layered rotary filter unit (1w) inserted therethrough, so as to be movable in the axial direction,
the double layered rotary filter unit (1w) is arranged at the end of each of the two upper and lower rows of the triple layered rotary filter units (1t) opposed to each other and/or at the beginning of the lower row on the untreated liquid inlet side, and
the outer edges of the seal members (15) are disposed to face closely, with a clearance, to an outer circumferential edge of the double layered rotary filter unit (1w).

3. The solid-liquid separator according to claim 1 or 2, wherein
filtrate holes (7) are provided concentrically in the projection-equipped disk filter pieces (5) and the large-diameter disk filter pieces (2) of the plurality of triple layered rotary filter units (1t) and in the projection-equipped disk filter pieces (5) of the double layered rotary filter unit (1w) arranged at the beginning of the lower row on the untreated liquid inlet side, and filtrate cutout holes (8) are provided concentrically in the small-diameter disk filter pieces (3) of the plurality of triple layered rotary filter units (1t) and in the small-diameter disk filter pieces (3) of the double layered rotary filter unit (1w),
the filtrate holes (7) and the filtrate cutout holes (8) form filtrate passages (6) inside the triple layered rotary filter units (1t) and the double layered rotary filter unit (1w) after being stacked,
openings at filtrate sending terminals of the respective filtrate passages (6) lead into an inside of a filtrate chamber (13) provided outside a rear lateral wall (9r) of the treatment tank (9), and
a lower wall of the filtrate chamber (13) is provided with a filtrate chamber outlet (14).

4. The solid-liquid separator according to any one of claims 1 to 3, wherein the projection-equipped disk filter pieces (5) are made of resin.

## Patentansprüche

1. Feststoff-Flüssigkeits-Trennvorrichtung, umfassend:
einen Behandlungstank (9) mit einem Einlass (10) für unbehandelte Flüssigkeit, einem Feststoff-Auslass (11) und einem Filtrat-Auslass (12);
eine Mehrzahl von Dreifachschicht-Drehfiltereinheiten (1t), die zwischen dem Einlass (10) für unbehandelte Flüssigkeit und dem Feststoff-Auslass (11) vorgesehen sind, wobei jede der Dreifachschicht-Drehfiltereinheiten (1t) ein Scheibenfilterstück (2) mit großem Durchmesser, ein Scheibenfilterstück (3) mit kleinem Durchmesser, das einen kleineren Durchmesser als das Scheibenfilterstück (2) mit großem Durchmesser hat, eine Mehrzahl von mit Vorsprung versehenen Scheibenfilterstücken (5), die jeweils einen kleineren Durchmesser als das Scheibenfilterstück (2) mit kleinem Durchmesser, aber einen größeren als das Scheibenfilterstück (3) mit kleinem Durchmesser haben, und eine Drehachse (4) umfasst; und
Dichtungseinrichtungen (15), die an einer Seitenwand (9s) auf der Zufuhrseite und einer Seitenwand (9d) auf der Austrittsseite des Behandlungstanks (9) vorgesehen sind, um feine Partikel zu sammeln, die in der behandelten Flüssigkeit enthalten sind,
wobei jedes der mit Vorsprung versehenen Scheibenfilterstücke (5) eine Mehrzahl von Vorsprüngen (5t) hat,
wobei eine Endfläche der Vorsprünge (5t) eines jeden der mit Vorsprung versehenen Scheibenfilterstücke (5) an eine Rückfläche eines benachbarten der mit Vorsprung versehenen Scheibenfilterstücke (5) in Reihe angrenzt, um eine Mehrzahl von Filterkerben (S) zu bilden,
wobei das Scheibenfilterstück (2) mit großem Durchmesser in einer ersten Filterkerbe der Mehrzahl von Filterkerben (S) angeordnet ist und an einer äußeren Peripherie der Drehachse (4) gestapelt ist, die dort hindurchgeführt ist, so dass das Scheibenfilterstück (2) mit großem Durchmesser in Axialrichtung beweglich ist,
wobei das Scheibenfilterstück (3) mit kleinem Durchmesser in einer zweiten Filterkerbe nahe der ersten Filterkerbe angeordnet ist und an der äußeren Peripherie der Drehachse (4) gestapelt ist, die dort hindurchgeführt ist, so dass das Scheibenfilterstück (3) mit kleinem Durchmesser in der Axialrichtung beweglich ist,
wobei die Dreifachschicht-Drehfiltereinheiten (1t) in regelmäßigen Abständen in aufsteigender Weise in einer Austrittsrichtung in Richtung des Feststoff-Auslasses (11) und in zwei oberen und unteren Reihen angeordnet sind, die einander gegenüberliegen,
wobei in Bezug auf benachbarte der Dreifachschicht-Drehfiltereinheiten (1t) eine Außen-Umfangskante des Scheibenfilterstücks (2) mit großem Durchmesser von einer der Dreifachschicht-Drehfiltereinheiten (1t) in die zweite Filterkerbe der anderen der Dreifachschicht-Drehfiltereinheiten (1t) eingeführt ist, so dass sie nahe zu den Vorsprüngen (5t) des mit Vorsprung versehenen Scheibenfilterstücks (5) und einer Außen-Umfangskante des Scheibenfilterstücks (3) mit kleinem Durchmesser der anderen Dreifachschicht-Drehfiltereinheit (1t) ist,
wobei Außenkanten der Dichtungseinrichtungen (15) so angeordnet sind, dass sie mit einem Zwischenraum zu der Außen-Umfangskante des mit Vorsprung versehenen Scheibenfilterstücks (5) der Dreifachschicht-Drehfiltereinheit (1t) an einem Ende von jedem der zwei oberen und unteren Reihen auf Seiten des Feststoff-Auslasses und zu der Außen-Umfangskante des mit Vorsprung versehenen Scheibenfilterstücks (5) der Dreifachschicht-Drehfiltereinheit (1t) am Anfang der unteren Reihe auf Seiten des Einlasses für unbehandelte Flüssigkeit nahe zugewandt sind, unter den Dreifachschicht-Drehfiltereinheiten (1t), die in den zwei oberen und unteren Reihen angeordnet sind, die einander gegenüberliegen, und
wobei das Scheibenfilterstück (2) mit großem Durchmesser und das Scheibenfilterstück (3) mit kleinem Durchmesser so konfiguriert sind, dass sie synchron mit der Drehachse (4) rotieren, während sie in der ersten Filterkerbe bzw. in der zweiten Filterkerbe in Axialrichtung oszillieren.

2. Feststoff-Flüssigkeits-Trennvorrichtung nach Anspruch 1, die ferner eine Doppelschicht-Drehfiltereinheit (1w) inklusive einem Paar von mit Vorsprung versehenen Scheibenfilterstücken (5), einem Scheibenfilterstück (3) mit kleinem Durchmesser und einer Drehachse (4) umfasst, wobei
eine Endfläche der Vorsprünge (5t) von einem der Paare von mit Vorsprung versehenen Scheibenfilterstücken (5) der Doppelschicht-Drehfiltereinheiten (1w) an eine Rückfläche des anderen mit Vorsprung versehenen Scheibenfilterstücks (5) in Reihe angrenzt, um eine Mehrzahl von dritten Filterkerben (S) zu bilden,
das Scheibenfilterstück (3) mit kleinem Durchmesser der Doppelschicht-Drehfiltereinheit (1w) in den dritten Filterkerben (S) angeordnet ist und an einer äußeren Peripherie der Drehachse (4) der Doppelschicht-Drehfiltereinheit (1w) gestapelt ist, welche dort hindurchgeführt ist, so dass es in Axialrichtung beweglich ist,
die Doppelschicht-Drehfiltereinheit (1w) an dem Ende eines jeden der zwei oberen und unteren Reihen der Dreifachschicht-Drehfiltereinheiten (1t), die einander gegenüberliegen, und/oder an dem Anfang der ersten Reihe auf Seiten des Einlasses für unbehandelte Flüssigkeit angeordnet ist, und
die Außenkanten der Dichtungseinrichtungen (15) so angeordnet sind, dass sie mit einem Zwischenraum zu der Außen-Umfangskante der Doppelschicht-Drehfiltereinheit (1w) nahe zugewandt sind.

3. Feststoff-Flüssigkeits-Trennvorrichtung nach Anspruch 1 oder 2, wobei Filtratlöcher (7) konzentrisch in den mit Vorsprung versehenen Scheibenfilterstücken (5) und den Scheibenfilterstücken (2) mit großem Durchmesser der Mehrzahl von Dreifachschicht-Drehfiltereinheiten (1t) und in den mit Vorsprung versehenen Scheibenfilterstücken (5) der Doppelschicht-Drehfiltereinheit (1w) vorgesehen sind, die am Anfang der unteren Reihe auf Seiten des Einlasses für unbehandelte Flüssigkeit angeordnet sind, und Filtrat-Ausschnittslöcher (8) konzentrisch in den Scheibenfilterstücken (3) mit kleinem Durchmesser der Mehrzahl von Dreifachschicht-Drehfiltereinheiten (1t) und in den Scheibenfilterstücken (3) mit kleinem Durchmesser der Doppelschicht-Drehfiltereinheit (1w) vorgesehen sind,
die Filtratlöcher (7) und die Filtrat-Ausschnittslöcher (8) Filtrat-Passagen (6) innerhalb der Dreifachschicht-Drehfiltereinheiten (1t) und der Doppelschicht-Drehfiltereinheit (1w) bilden, nachdem sie gestapelt wurden,
Öffnungen an Filtrat-Sendeanschlüssen der jeweiligen Filtrat-Passagen (6) in das Innere einer Filtratkammer (13) führen, die außerhalb einer hinteren Seitenwand (9r) des Behandlungstanks (9) vorgesehen ist, und
eine untere Wand der Filtratkammer (13) mit einem Filtratkammer-Auslass (14) versehen ist.

4. Feststoff-Flüssigkeits-Trennvorrichtung nach einem der Ansprüche 1 bis 3, wobei die mit Vorsprung versehenen Scheibenfilterstücke (5) aus Harz gebildet sind.

## Revendications

1. Séparateur de solide - liquide comprenant :
un réservoir de traitement (9) ayant une entrée de liquide non traité (10), une sortie de solide (11), et une sortie de filtrat (12) ;
une pluralité d'unités de filtre rotatives à trois couches (1t) prévues entre l'entrée de liquide non traité (10) et la sortie de solide (11), chacune des unités de filtre rotatives à trois couches (1t) comprenant une pièce de filtre à disque de grand diamètre (2), une pièce de filtre à disque de petit diamètre (3) ayant un plus petit diamètre que la pièce de filtre à disque de grand diamètre (2), une pluralité de pièces de filtre à disque équipées de saillie (5) chacune ayant un plus petit diamètre que la pièce de filtre à disque de grand diamètre (2) mais plus grand que la pièce de filtre à disque de petit diamètre (3) et un arbre rotatif (4) ; et
des éléments d'étanchéité (15) prévus sur une paroi latérale du côté de l'alimentation (9s) et une paroi latérale du côté de la décharge (9d) du réservoir de traitement (9) pour collecter de fines particules contenues dans le liquide qui est traité,
dans lequel chaque pièce de filtre à disque équipée de saillie (5) a une pluralité de saillies (5t),
dans lequel une face d'extrémité des saillies (5t) de chacune des pièces de filtre à disque équipées de saillie (5) vient en butée contre une surface arrière d'une pièce adjacente des pièces de filtre à disque équipées de saillie (5) en série pour former une pluralité de rainures de filtre (S),
la pièce de filtre à disque de grand diamètre (2) est disposée dans une première rainure de filtre de la pluralité de rainures de filtre (S) et est empilée sur une périphérie externe de l'arbre rotatif (4) inséré à travers, de sorte que la pièce de filtre à disque de grand diamètre (2) est mobile dans une direction axiale,
la pièce de filtre à disque de petit diamètre (3) est disposée dans une deuxième rainure de filtre à côté de la première rainure de filtre et est empilée sur la périphérie externe de l'arbre rotatif (4) inséré à travers, de sorte que la pièce de filtre à disque de petit diamètre (3) est mobile dans la direction axiale,
les unités de filtre rotatives à trois couches (1t) sont agencées à intervalles réguliers d'une manière ascendante dans une direction de décharge vers la sortie de solide (11) et dans deux rangées supérieure et inférieure opposées entre elles,
en ce qui concerne les unités adjacentes des unités de filtre rotatives à trois couches (1t), un bord circonférentiel externe de la pièce de filtre à disque de grand diamètre (2) de l'une des unités de filtre rotatives à trois couches (1t) est inséré dans la deuxième rainure de filtre de l'autre des unités de filtre rotatives à trois couches (1t) afin d'être proche des saillies (5t) de la pièce de filtre à disque équipée de saillie (5) et un bord circonférentiel externe de la pièce de filtre à disque de petit diamètre (3) de l'autre unité de filtre rotative à trois couches (1t),
les bords externes des éléments d'étanchéité (15) sont disposés pour faire étroitement face, avec un jeu, au bord circonférentiel externe de la pièce de filtre à disque équipée de saillie (5) de l'unité de filtre rotative à trois couches (1t) à la fin de chacune des deux rangées supérieure et inférieure du côté de la sortie de solide et au bord circonférentiel externe de la pièce de filtre à disque équipée de saillie (5) de l'unité de filtre rotative à trois couches (1t) au début de la rangée inférieure du côté de l'entrée de liquide non traité, parmi les unités de filtre rotatives à trois couches (1t) agencées dans les deux rangées supérieure et inférieure opposées entre elles, et
la pièce de filtre à disque de grand diamètre (2) et la pièce de filtre à disque de petit diamètre (3) sont configurées pour tourner de manière synchrone avec l'arbre rotatif (4) tout en oscillant dans la direction axiale dans la première rainure de filtre et la deuxième rainure de filtre, respectivement.

2. Séparateur de solide - liquide selon la revendication 1, comprenant en outre une unité de filtre rotative à deux couches (1w) comprenant une paire de pièces de filtre à disque équipées de saillie (5), une pièce de filtre à disque de petit diamètre (3) et un arbre rotatif (4), dans lequel :
une face d'extrémité des saillies (5t) de l'une de la paire de pièces de filtre à disque équipées de saillie (5) des unités de filtre rotatives à deux couches (1w) vient en butée contre une surface arrière de l'autre pièce de filtre à disque équipée de saillie (5) en série pour former une pluralité de troisièmes rainures de filtre (S),
la pièce de filtre à disque de petit diamètre (3) de l'unité de filtre rotative à deux couches (1w) est disposée dans les troisièmes rainures de filtre (S) et est empilée sur une périphérie externe de l' arbre rotatif (4) de l'unité de filtre rotative à deux couches (1w) inséré à travers, afin d'être mobile dans la direction axiale,
l'unité de filtre rotative à deux couches (1w) est agencée à la fin de chacune des deux rangées supérieure et inférieure des unités de filtre rotatives à trois couches (1t) opposées entre elles et/ou au début de la rangée inférieure du côté de l'entrée de liquide non traité, et
les bords externes des éléments d'étanchéité (15) sont disposés pour faire étroitement face, avec un jeu, à un bord circonférentiel externe de l'unité de filtre rotative à deux couches (1w).

3. Séparateur de liquide - solide selon la revendication 1 ou 2, dans lequel:
des trous de filtrat (7) sont prévus de manière concentrique dans les pièces de filtre à disque équipées de saillie (5) et les pièces de filtre à disque de grand diamètre (2) de la pluralité d'unités de filtre rotatives à trois couches (1t) et dans les pièces de filtre à disque équipées de saillie (5) de l'unité de filtre rotative à deux couches (1w) agencées au début de la rangée inférieure du côté de l'entrée de liquide non traité, et des trous découpés de filtrat (8) sont prévus de manière concentrique dans les pièces de filtre à disque de petit diamètre (3) de la pluralité d'unités de filtre rotatives à trois couches (1t) et dans les pièces de filtre à disque de petit diamètre (3) de l'unité de filtre rotative à deux couches (1w),
les trous de filtrat (7) et les trous découpés de filtrat (8) forment des passages de filtrat (6) à l'intérieur des unités de filtre rotatives à trois couches (1t) et de l'unité de filtre rotative à deux couches (1w) après avoir été empilées,
des ouvertures au niveau des terminaisons d'envoi de filtre des passages de filtrat (6) respectifs conduisent dans un intérieur d'une chambre de filtrat (13) prévue à l'extérieur d'une paroi latérale arrière (9r) du réservoir de traitement (9), et
une paroi inférieure de la chambre de filtrat (13) est prévue avec une sortie de chambre de filtrat (14).

4. Séparateur de solide - liquide selon l'une quelconque des revendications 1 à 3, dans lequel les pièces de filtre à disque équipées de saillie (5) sont réalisées à partir de résine.
